Europäisches Patentamt

European Patent Office

Office européen des brevets

(19)

(11) Publication number: 0 116 962

A2

# (12) EUROPEAN PATENT APPLICATION

(21) Application number: 84101618.1

(22) Date of filing: 16.02.84

(51) Int. Cl.³: H 04 L 11/16
H 04 L 7/00, H 04 J 3/06

(30) Priority: 17.02.83 JP 25058/83

(43) Date of publication of application:
29.08.84 Bulletin 84/35

(84) Designated Contracting States:
BE DE FR GB NL

(71) Applicant: NEC CORPORATION
33-1, Shiba 5-chome, Minato-ku
Tokyo 108(JP)

(71) Applicant: Nippon Telegraph and Telephone Public
Corporation
1-6 Uchisaiwai-cho, 1-chome Chiyoda-ku
Tokyo 100(JP)

(72) Inventor: Ono, Tatsuhiro
NEC Corporation 33-1, shiba 5-chome
Minato-ku Tokyo(JP)

(72) Inventor: Koike, Shin'ichi
NEC Corporation 33-1, Shiba 5-chome
Minato-ku Tokyo(JP)

(72) Inventor: Mano, Shoji
5-1-6, Kamirenjaku
Mitaka-shi Tokyo(JP)

(72) Inventor: Okimi, Katsuya
4-4-13, Takanawa
Minato-ku Tokyo(JP)

(74) Representative: Vossius Vossius Tauchner Heunemann
Rauh
Siebertstrasse 4 P.O. Box 86 07 67
D-8000 München 86(DE)

(54) Frame synchronizing system.

(57) The frame synchronizing system for a muliplex transmission system comprises a center unit (1) and a plurality of terminal units (3,4,5). They are interconnected through up and down dual bus transmission lines (R,T). Communications between the center unit (1) and each terminal unit (3,4,5) or between the terminal units (3,4,5) are performed on the time division basis. The frame synchronising system comprises a bus terminator (2), too. It is provided across terminal ends of the bus transmission lines (R,T). The bus terminator (2) returns a frame synchronizing-bit having a plurality of bits on the down transmission line (R) to the up transmission line (T). Each terminal unit (3,4,5) performs frame synchronization in accordance with the returned frame bit to send a signal to the up transmission line (T) at a phase subject to the phase synchronization. With this system, bit overlap between channels of respective terminal units can be eliminated to ensure accurate transmission.

FIG.3

EP 0 116 962 A2

VOSSIUS · VOSSIUS · TAUCHNER
HEUNEMANN · RAUH
PATENTANWÄLTE
SIEBERTSTR. 4, 8000 MÜNCHEN 80
TEL. (089) 47 40 75

0116962

Our ref.: S 872 EP                    February 16, 1984
Case: 7875-A
NEC Corporation


## Frame Synchronizing System

This invention relates to a frame synchronizing system for use in a multiplex transmission system.

In a prior art multiplex transmission system, a signal at each terminal unit is sent out to an up or outgoing bus transmission line in synchronizm with a phase extracted from a signal on a down or incoming bus transmission line. With this transmission system, however, the phase of the signal received on the down bus line is varied by the transmission delay which depends upon the position of each terminal unit along the bus transmission line. Thus, the phases of the signals sent out to the up line from respective terminal units differ from each other, with the result that bit overlap will take place between channels of respective terminal units, thus preventing accurate transmission.

Accordingly, it is an object of this invention to provide a novel frame synchronizing system capable of eliminating the difficulty described above so as to effect correct transmission.

Another object of this invention is to provide a novel frame synchronizing system capable of greatly.

increasing the bus line length.

According to this invention, there is provided a frame synchronizing system for use in a multiplex transmission system in which a center unit and a plurality of terminal units are interconnected through up and down dual bus transmission lines, and in which communications between the center unit and each terminal unit or between the terminal units are performed on the time division frame basis. This frame synchronizing system comprises a bus terminator across the terminal ends of the bus transmission lines, so that a frame synchronizing-bit having a plurality of bits on the down bus transmission line is returned to the up bus transmission line via the bus terminator. Each of the terminal units performs frame synchronization in accordance with the returned frame bit to send a signal to the up bus transmission line at a phase subject to the frame synchronization.

In the accompanying drawings:

Fig. 1 is a connection diagram showing a prior art frame synchronizing system;

Figs. 2a to 2e are timing charts for explaining the operation of the frame synchronizing system shown in Fig. 1;

Fig. 3 is a connection diagram showing a preferred embodiment of the frame synchronizing system according to this invention; and

- 3 -                    0116962

Figs. 4a to 4e are timing charts for explaining the operation of the embodiment shown in Fig. 3.

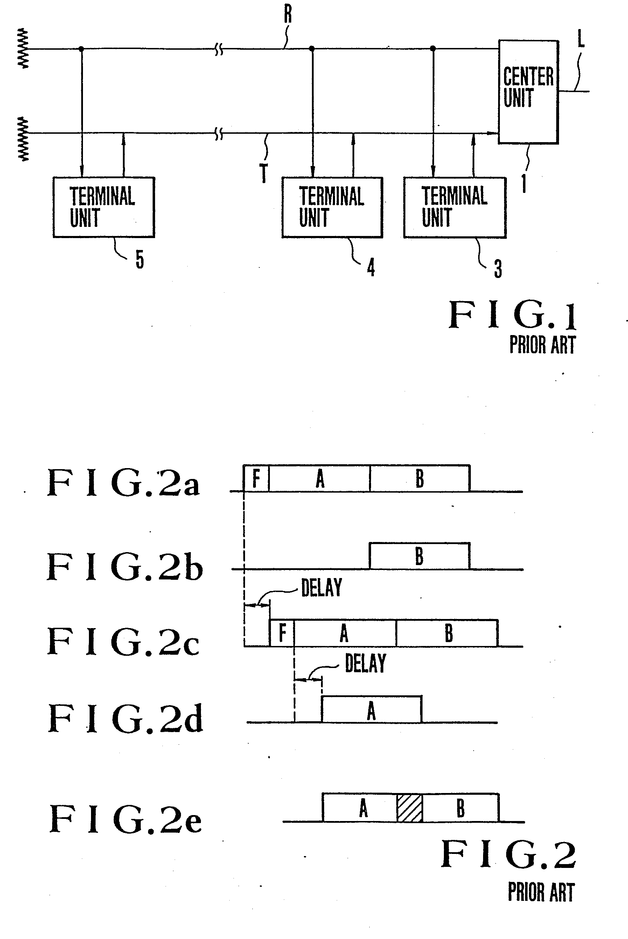

For better understanding of this invention, a typical prior art frame synchronizing system will first be described with reference to Fig. 1 and Figs. 2a to 2e. In the frame synchronizing system shown in Fig. 1, a terminal unit 3 at the most proximity to a center unit 1 receives at channel B a signal (Fig. 2a) transmitted through a down bus line R (directed from center unit to terminal unit) terminating in a resistor and sends out a signal (Fig. 2b) at channel B in synchronism with a frame bit F extracted from the signal on the down bus line R. Like the terminal unit 3, a terminal unit 5 at the most distance from the center unit 1 sends out a signal at channel A in synchronism with the frame bit F extracted from the signal on the down bus line. However, the signal received by the terminal unit 5 is delayed by the down line R as shown in Fig. 2c. In addition, the signal sent out at channel A is delayed before it reaches the center unit 1, as shown in Fig. 2d. As a result, signals sent from the terminal units 3 and 5 overlap with each other as shown in Fig. 2e, thus preventing accurate transmission. An up bus line T (directed from terminal unit to center unit) also terminates in a resistor.

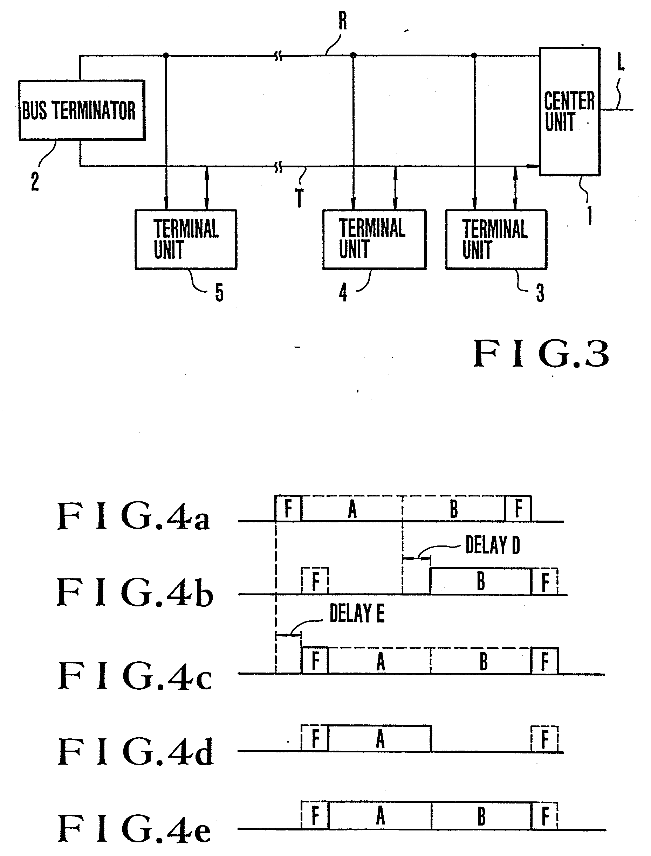

A multiplex system shown in Fig. 3 to which the invention is applicable comprises a center unit 1 (in this embodiment, a network terminator), a bus terminator 2 provided across terminal ends of a down bus line R and an up bus line T extending from the center unit 1, to extract a frame bit from a signal on the down bus line R and return only the synchronizing-bit to the up bus line T, terminal units 3, 4 and 5 associated with the lines R and T, and a subscribers line L.

The bus terminator 2 has a synchronizing circuit (not shown). A signal on the down bus line R is applied to the synchronizing circuit, at which the frame signal is extracted. When the frame synchronizing pattern is detected, a generator (not shown) also included in the bus terminator 2 is triggered to generate a similar frame synchronizing pattern which in turn is sent to the up bus line T.

Consider now a system with a bus having communication capacity such that one frame comprises two channels A and B. Further, it is assumed now that, at a given communication time, channels A and B are allotted to terminal units 3 and 5, respectively. The bus terminator 2 returns a frame bit F on the down line R to the up line T (see Fig. 4a). The terminal unit 5 detects a phase of the frame bit F returned to the up line T and sends out a signal to the up line T at a phase synchronous with the detected phase during a time slot of the channel B allotted to the terminal unit 5. This signal at channel B is delayed by D in the up line T to reach the center unit 1 as shown in Fig. 4b. The terminal unit 3, on the other hand, detects a phase delayed by E of the frame bit F returned to the up line T (see Fig. 4c) so as to send out a signal to the up line T at a phase synchronous with the detected phase during a time slot of channel A allotted to the terminal unit 3. Since the distance between the center unit 1 and the terminal unit 3 is short, the signal sent out at the channel A can reach the center unit without any appreciable delay (see Fig. 4d). For this reason, signals at channels A and B do not overlap irrespective of the positions of the terminal units 3 and 5 along the transmission line (see Fig. 4e).

As described above, according to this invention, the bus terminator provided across terminal ends of the up and down bus lines returns a frame bit of a signal on the down line to the up line and each terminal unit sends a signal to the up line in synchronism with a phase extracted from the frame bit returned to the up line so that the up line signal frames sent out from a plurality of terminal units can be inputted to the center unit at the coincident phase, whereby the bus line length which has been limited due to transmission delay can theoretically be extended to any infinite length.

Claim

Frame synchronizing system for a multiplex transmission system in which a center unit (1) and a plurality of terminal units (3,4,5) are interconnected through up and down dual bus transmission lines (R,T), and in which communications between the center unit (1) and each terminal unit (3,4,5) or between said terminal units (3,4,5) are performed on the time division basis, c h a r a c t e r i z e d   i n   t h a t

(a)   a bus terminator (2) is provided across the terminal ends of said bus transmission lines (R,T),

(b)   said bus terminator (2) returns a frame synchronizing-bit on said down bus transmission line (R) to said up bus transmission line (T),

(c)   the frame synchronizing-bit has a plurality of bits and that

(d)   each of said terminal units (3,4,5) performing frame synchronization in accordance with said returned frame bit to send a signal to said up bus transmission line (T) at a phase subject to the frame synchronization.

−112−

R

CENTER
UNIT
L

TERMINAL
UNIT
5

T

TERMINAL
UNIT
4

TERMINAL
UNIT
3

1

F I G.1
PRIOR ART

F I G.2a    | F | A | B |

F I G.2b    | B |

DELAY

F I G.2c    | F | A | B |

DELAY

F I G.2d    | A |

F I G.2e    | A |▨| B |

F I G.2
PRIOR ART

FIG.3

FIG.4a

FIG.4b

FIG.4c

FIG.4d

FIG.4e